# EUROPEAN PATENT SPECIFICATION

(11) **EP 2 831 322 B1**
(45) Date of publication and mention of the grant of the patent: **02.08.2017**
(21) Application number: 13714529.8
(22) Date of filing: 28.03.2013
(51) Int. Cl.: B32B 27/02, B32B 3/12, D04H 1/587, D04H 1/4342, B29D 99/00, C08J 5/04, D04H 1/541, D21H 27/38, D21H 21/34, D21H 25/04, D21H 21/18, B31D 3/02, D04H 1/64

(54) **HONEYCOMB PAPER**
WABENPAPIER
PAPIER EN NID D'ABEILLES

(30) Priority: 30.03.2012 US 201261617981 P
(43) Date of publication of application: 04.02.2015
(73) Proprietor: SABIC Global Technologies B.V., 4612 PX Bergen op Zoom (NL)
(72) Inventor: CHOATE, Kim R., Pittsfield, Massachusetts 01201 (US); LOCKYER, Dennis, Pittsfield, Massachusetts 01201 (US); ADJEI, Thomas, Dalton, Massachusetts 01226 (US); LANNING, Vincent L., Pittsfield, Massachusetts 01201 (US); MILNE, Craig Lawrence, Pittsfield, Massachusetts 01201 (US); TEUTSCH, Erich Otto, Pittsfield, Massachusetts 01201 (US); DAVID, Benny Ezekiel, Great Barrington, Massachusetts 01230 (US)
(74) Representative: Office Freylinger
(86) International application number: PCT/US2013/034331
(87) International publication number: WO 2013/148988

(56) References cited:
- EP-A1- 0 383 953
- WO-A1-96/11293
- WO-A2-2012/037225
- US-A- 5 030 305
- US-A- 5 670 001

## Description

### BACKGROUND

This disclosure relates to honeycomb paper, methods of making and articles comprising honeycomb paper. Typically, honeycomb paper is composed of a corrugated core bonded to a facing sheet on each side.

Honeycomb composites are made from a variety of materials including a specially developed paper product that has the high strength and temperature capability required for demanding applications in aerospace and transportation, but also has some negative properties including high moisture uptake, marginal flame performance, difficulty with adhesive bonding, long term stability and toughness. The industry has overcome most of those negative attributes, but flame performance is becoming more critical as is the bonding process, which depends on epoxy, phenolic or other thermosetting polymer technologies. These tend to degrade the flame performance and increase the hygroscopic nature of the honeycomb.

Currently high grade honeycomb papers are made from aramid fibers and fibrids providing great strength and reasonable flame performance, but are inherently hygroscopic and slowly undergo hydrolysis, slowly losing their strength at high relative humidity. The constant change in atmospheric pressure and relative humidity also cause moisture to collect in the paper. The water uptake actually has a significant impact on weight, where weight is a critical factor such as in aerospace or transportation in general.

Adhesion of the paper to itself and to the surfacing material depends to a large extent on a highly controlled degree of porosity, which permits low viscosity thermosetting polymers to penetrate the pores on curing, locking the materials together. The papers also need to be treated with either an epoxy or a phenolic resin after forming and opening of the honeycomb to strengthen and stiffen the structure, adding process steps and time to production of the paper. The epoxies and phenolics add fuel, smoke, and toxic components to the structure and can require additional materials to provide the necessary flame performance. The adhesives and coating materials have a limited shelf life and require cool storage.

### SUMMARY

In one aspect, a fibrous layer is provided, said fibrous layer comprises a combination of: first fibers comprising 20 to 50 weight percent of a reinforcing fiber; 50 to 70 weight percent of a continuous phase polymer fiber having a melt temperature at least 20°C lower than the reinforcing fibers; and wherein the first fibers are multicomponent fibers comprising a reinforcing polyetherimide core and a continuous phase liquid crystal sheath or a reinforcing liquid crystal polymer core and a continuous phase polyetherimide sheath, 5 to 10 weight percent of binder fibers having a melt temperature lower than that of the continuous phase fibers, wherein the weight percent of each of the fibers is based on the total weight of the fibers in the layer and the thickness of the mat is more than 0 to less than 300 µm..

In one aspect, a consolidated fibrous mat is provided, comprising 20 to 30 weight percent of reinforcing fibers having a melt temperature above the consolidation temperature such that the fibers are intact in the consolidated fibrous mat; and a continuous phase connecting the reinforcing fibers, comprising 50 to 70 weight percent of a polymer having a melt temperature lower than the consolidation temperature and typically at least 20°C lower than the reinforcing fibers, and 5 to 10 weight percent of a binder having a melt temperature lower than the polymer; wherein the weight percent of each of the reinforcing fibers, the polymer, and the binder is based on the combined total weight of the reinforcing fibers, the polymer, and the binder.

In another aspect, a consolidated fibrous mat is provided, wherein the reinforcing fibers comprise polyamide fibers or liquid crystal polymer fibers, or a combination comprising at least one of the foregoing fibers; the continuous phase polymer is a polyetherimide; and the binder is a polycarbonate copolymer, polyalkylene terephthalate, polyether ether ketone, polyamide, or a combination comprising at least one of the foregoing.

In another aspect, a consolidated fibrous mat is provided, wherein the reinforcing fibers are polyetherimide fibers; the continuous phase polymer is polyamide, liquid crystal polymer, or a combination comprising at least one of the foregoing polymers; and the binder is polycarbonate copolymer, polyalkylene terephthalate, polyether ether ketone, polyamide, or a combination comprising at least one of the foregoing polymers.

In another aspect, honeycomb paper is provided comprising a composition such as varnish or adhesive deposited on or absorbed within a consolidated fibrous mat.

In a further aspect, a fibrous layer is provided comprising a combination of: first fibers comprising 20 to 30 weight percent of a reinforcing polymer having a melt temperature of 300°C to 350°C; 50 to 70 weight percent of continuous phase polymer fibers having a melt temperature 50°C to 20°C lower than the reinforcing fibers; and 5 to 10 weight percent of binder fibers having a melt temperature lower than that of the continuous phase fibers, wherein the weight percent of each of the fibers is based on the total weight of the fibers in the layer.

In another aspect, a method of forming the consolidated fibrous mat is provided, comprising casting the fiber composition in a suspension solvent to form a layer; dewatering the layer; and consolidating the layer to form the consolidated fibrous mat.

Articles are provided comprising honeycomb paper core bound to a protective layer comprising polycarbonate copolymer film, glass fiber mat entrained with polyimide, flame retardant fabric or sheet metal.

### DETAILED DESCRIPTION

The current invention addresses several of the shortcomings of existing honeycomb papers such as bonding, moisture uptake, porosity, and hydrolytic stability through careful choice of materials and process. The paper is produced by mixing several different chopped, thermoplastic polymer fibers chosen to have melt temperatures differing sufficiently to permit consolidation, during which the primary polymer is pressed into a continuous film, while the reinforcing fiber polymer remains as un-melted fibers. The combination forms a very strong, reinforced film that can be bonded with another thermoplastic polymer film that does not degrade the flame performance. The combination of the three thermoplastic polymers exhibit a much reduced moisture uptake, very low porosity, but excellent adhesion to polycarbonate, which also bonds well to polyetherimide polymer when heated under pressure to approximately 375°F (190.5°C).

The honeycomb paper provided by the invention can be used to form honeycomb cores according to known methods in the art, such as those surveyed in the article "Continuously Produced Honeycomb Cores" by K.U. Leuven Department MTM, Belgium. For example, honeycombs can be produced by the traditional expansion process in which a series of parallel glue lines are printed on flat sheets, which are then stacked such that the lines in successive sheets do not align in registry and instead are offset, usually by half the spacing between glue lines. After the glue has cured, the stack is cut perpendicular to the glue lines into individual blocks of desired width. To expand the honeycomb, the top and bottom sheet of an individual block are pulled apart as in the opening of an accordion. The block thus expands into a honeycomb pattern in which the glue lines define the attachment points between the sheets in the stack, and the spacing between adjacent pairs of glue lines defines the length of individual walls that make the honeycomb pattern. Air can be blown through the honeycomb to assist in expansion.

The consolidated fibrous mat can contain 20 to 50 weight percent (wt.%) of reinforcing fibers, for example 20 to 45 wt.%, 20 to 40 wt.%, 20 to 35 wt. %, 20 to 30 wt. %, 20 to 25 wt.%, 25 to 50 wt.%, 25 to 40 wt.%, 25 to 30 wt.%, 30 to 50 wt.%, 35 to 50 wt.%, 40 to 50 wt.%, 30 to 50wt.%, 30 to 45 wt.%, or 30 to 40 wt.% of reinforcing fibers

The consolidated fibrous mat can contain 50 to 70 weight percent of a polymer having a melt temperature at least 20°C lower than the reinforcing fibers, for example 50 to 65 wt.%, 50 to 60 wt.%, 55 to 65 wt.%, 55 to 60 wt.%, 55 to 70 wt.%, 60 to 70wt.%, 65 to 70 wt.% of a polymer having a melt temperature at least 20°C lower than the reinforcing fibers.

The consolidated fibrous mat can contain more than 0 weight percent of a binder having a melt temperature lower than the polymer, for example 5 to 20 wt.%, 5 to 15 wt.%, 5 to 10 wt.% of a binder having a melt temperature lower than the polymer.

Various numerical ranges are disclosed in this patent application. Because these ranges are continuous, they include every value between the minimum and maximum values. Unless expressly indicated otherwise, the various numerical ranges specified in this application are approximations. The endpoints of all ranges directed to the same component or property are inclusive of the endpoint and independently combinable.

The terms "a" and "an" do not denote a limitation of quantity, but rather denote the presence of at least one of the referenced items. "Or" means "and/or." As used herein, "combination thereof" is inclusive of one or more of the recited elements, optionally together with a like element not recited. Reference throughout the specification to "an embodiment," "another embodiment," "some embodiments," and so forth, means that a particular element (e.g., feature, structure, property, and/or characteristic) described in connection with the embodiment is included in at least an embodiment described herein, and may or may not be present in other embodiments. In addition, it is to be understood that the described element(s) can be combined in any suitable manner in the various embodiments.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group. The term "alkyl" includes both C₁₋₃₀ branched and straight chain, unsaturated aliphatic hydrocarbon groups having the specified number of carbon atoms. Examples of alkyl include, but are not limited to, methyl, ethyl, n-propyl, i-propyl, n-butyl, s-butyl, t-butyl, n-pentyl, s-pentyl, n- and s-hexyl, n-and s-heptyl, and, n- and s-octyl. The term "aryl" means an aromatic moiety containing the specified number of carbon atoms and optionally 1 to 3 heteroatoms (e.g., O, S, P, N, or Si), such as to phenyl, tropone, indanyl, or naphthyl.

All molecular weights in this application refer to weight average molecular weights unless indicated otherwise. All such mentioned molecular weights are expressed in Daltons.

All ASTM tests are based on the 2003 edition of the Annual Book of ASTM Standards unless otherwise indicated.

The term "fibers" as used herein includes a wide variety of structures having a single filament with an aspect ratio (length : diameter) of greater than 2, specifically greater than 5, greater than 10, or greater than 100. The term fibers also includes fibrets (very short (length less than 1 millimeter (mm)), fine (diameter less than 50 micrometer (µm)) fibrillated fibers that are highly branched and irregular resulting in high surface area, and fibrils, tiny threadlike elements of a fiber. The diameter of a fiber is indicated by its fiber number, which is generally reported as either dtex or dpf. The numerical value reported as "dtex" indicates the mass in grams per 10,000 meters of the fiber. The numerical value "dpf" represents the denier per fiber. The denier system of measurement is used on two and single filament fibers, and dpf = Total Denier / Quantity of Uniform Filaments. Some common denier-related calculations are as follows:
1 denier = 1 gram per 9,000 meters = 0.05 grams per 450 meters = 0.111 milligrams per meter.

The term "fibrids", as used herein, means very small, nongranular, fibrous or film-like particles with at least one of their three dimensions being of minor magnitude relative to the largest dimension, such that they are essentially two-dimensional particles, typically having a length of greater than 0 to less than 0.3 mm, and a width of greater than 0 to less than 0.3 mm and a depth of greater than 0 to less than 0.1 mm. In an exemplary embodiment the fibrids are on the order of 100 µm x 100 µm x 0.1 µm.

Fibrids are typically made by streaming a polymer solution into a coagulating bath of liquid that is immiscible with the solvent of the solution. The stream of polymer solution is subjected to strenuous shearing forces and turbulence as the polymer is coagulated. The fibrid material of this invention can be meta or para-aramid or blends thereof. More specifically, the fibrid is a para-aramid. Such aramid fibrids, before being dried, can be used wet and can be deposited as a binder physically entwined about the floc component of a paper.

Polyetherimides comprise more than 1, for example 10 to 1,000 or 10 to 500 structural units, of formula (1) 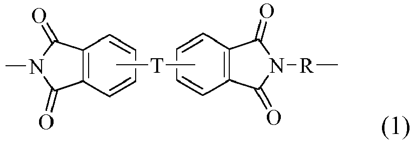 wherein each R is the same or different, and is a substituted or unsubstituted divalent organic group, such as a C₆₋₂₀ aromatic hydrocarbon group or a halogenated derivative thereof, a straight or branched chain C₂₋₂₀ alkylene group or a halogenated derivative thereof, a C₃₋₈ cycloalkylene group or halogenated derivative thereof, in particular a divalent group of formula (2) 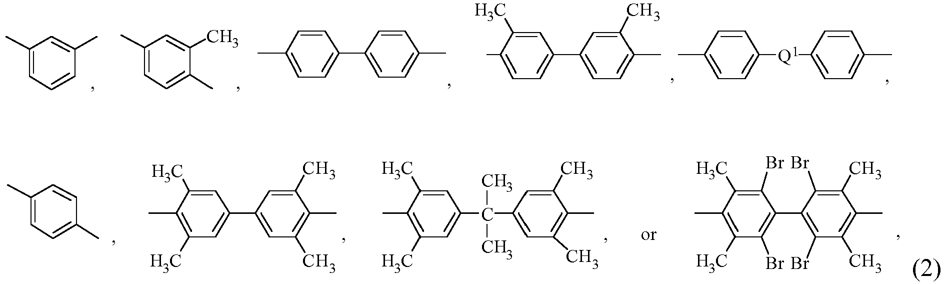 wherein Q¹ is -O-, -S-, -C(O)-, -SO₂-, -SO-, or -C_{y}H_{2y} wherein y is an integer from 1 to 5 or a halogenated derivative thereof (which includes perfluoroalkylene groups). In an embodiment, R is m-phenylene or p-phenylene.

Further in formula (1), T is -O- or a group of the formula -O-Z-O- wherein the divalent bonds of the -O- or the -O-Z-O- group are in the 3,3', 3,4', 4,3', or the 4,4' positions. The group Z in formula (1) is the same or different, and is also a substituted or unsubstituted divalent organic group, and can be an aromatic C₆₋₂₄ monocyclic or polycyclic moiety optionally substituted with 1 to 6 C₁₋₈ alkyl groups, 1 to 8 halogen atoms, or a combination comprising at least one of the foregoing, provided that the valence of Z is not exceeded. Exemplary groups Z include groups derived from a dihydroxy compound of formula (3): 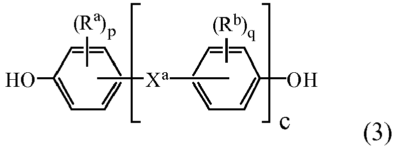 wherein R^{a} and R^{b} can be the same or different and are a halogen atom or a monovalent C₁₋₆ alkyl group, for example ; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of formulas (3a) 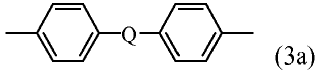 wherein Q is -O-, -S-, -C(O)-, -SO₂-, -SO-, or -C_{y}H_{2y}- wherein y is an integer from 1 to 5 or a halogenated derivative thereof (including a perfluoroalkylene group). In a specific embodiment, Z is derived from bisphenol A wherein Q in formula (3a) is 2,2-isopropylidene.

In an embodiment in formula (1), R is m-phenylene or p-phenylene and T is - O-Z-O wherein Z is a divalent group of formula (3a). Alternatively, R is m-phenylene or p-phenylene and T is -O-Z-O wherein Z is a divalent group of formula (3a) and Q is 2,2-isopropylidene.

In some embodiments, the polyetherimide can be a copolymer, for example, a polyetherimide sulfone copolymer comprising structural units of formula (1) wherein at least 50 mole % of the R groups are of formula (2) wherein Q¹ is -SO₂- and the remaining R groups are independently p-phenylene or m-phenylene or a combination comprising at least one of the foregoing; and Z is 2,2-(4-phenylene)isopropylidene. Alternatively, the polyetherimide optionally comprises additional structural imide units, for example imide units of formula (4) 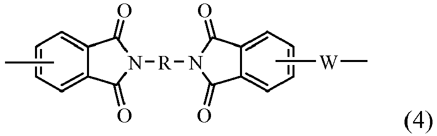 wherein R is as described in formula (1) and W is a linker of the formulas 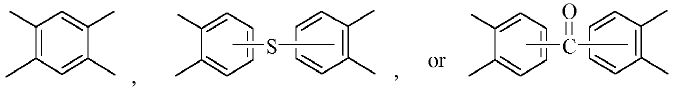 These additional structural imide units can be present in amounts of 0 to 10 mole % of the total number of units, specifically 0 to 5 mole %, more specifically 0 to 2 mole %. In an embodiment, no additional imide units are present in the polyetherimide.

The polyetherimide can be prepared by any of the methods well known to those skilled in the art, including the reaction of an aromatic bis(ether anhydride) of formula (5) 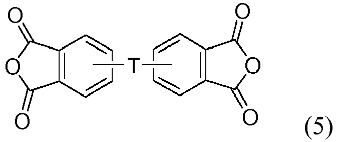 with an organic diamine of formula (6)

H₂N-R-NH₂ (6)

wherein T and R are defined as described above. Copolymers of the polyetherimides can be manufactured using a combination of an aromatic bis(ether anhydride) of formula (5) and a different bis(anhydride), for example a bis(anhydride) wherein T does not contain an ether functionality, for example T is a sulfone.

Illustrative examples of bis(anhydride)s include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; and, 4-(2,3-dicarboxyphenoxy)-4'-(3,4-dicarboxyphenoxy)diphenyl sulfone dianhydride, as well as various combinations comprising at least one of the foregoing.

Examples of organic diamines include ethylenediamine, propylenediamine, trimethylenediamine, diethylenetriamine, triethylene tetramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone, and bis(4-aminophenyl) ether. Combinations of these compounds can also be used. In some embodiments, the organic diamine is m-phenylenediamine, p-phenylenediamine, sulfonyl dianiline, or a combination comprising at least one of the foregoing diamines.

Included among the many methods of making polyetherimides are those disclosed in U.S. Patents 3,847,867, 3,852,242, 3,803,085, 3905,942, 3,983,093, 4,443,591, and 7,041,773. These patents are mentioned for the purpose of teaching, by way of illustration, general and specific methods for preparing polyimides. Some polyetherimide (PEI) materials are described in ASTM D5205-96 Standard Classification System for Polyetherimide Materials.

Polyetherimides can have a melt index of 0.1 to 10 grams per minute (g/min), as measured by American Society for Testing Materials (ASTM) D1238 at 340 to 370°C, using a 6.7 kilogram (kg) weight. In some embodiments, the polyetherimide polymer has a weight average molecular weight (Mw) of 1,000 to 150,000 grams/mole (Dalton), as measured by gel permeation chromatography, using polystyrene standards. In some embodiments the polyetherimide has Mw of 10,000 to 80,000 Daltons. Such polyetherimide polymers typically have an intrinsic viscosity greater than 0.2 deciliters per gram (dl/g), or, more specifically, 0.35 to 0.7 dl/g as measured in m-cresol at 25°C.

In an embodiment, the polyetherimide comprises less than 50 ppm amine end groups. In other instances the polymer will also have less than 1 ppm of free, unpolymerized bisphenol A (BPA).

The polyetherimides can have low levels of residual volatile species, such as residual solvent and/or water. In some embodiments, the polyetherimides have a residual volatile species concentration of less than 1,000 parts by weight per million parts by weight (ppm), or, more specifically, less than 500 ppm, or, more specifically, less than 300 ppm, or, even more specifically, less than 100 ppm. In some embodiments, the composition has a residual volatile species concentration of less than 1,000 parts by weight per million parts by weight (ppm), or, more specifically, less than 500 ppm, or, more specifically, less than 300 ppm, or, even more specifically, less than 100 ppm.

Examples of residual volatile species are halogenated aromatic compounds such as chlorobenzene, dichlorobenzene, trichlorobenzene, aprotic polar solvents such as dimethyl formamide (DMF), N-methyl pyrrolidinone (NMP), dimethyl sulfoxide (DMSO), diaryl sulfones, sulfolane, pyridine, phenol, veratrole, anisole, cresols, xylenols, dichloro ethanes, tetra chloro ethanes, pyridine and mixtures thereof.

Low levels of residual volatile species in the final polymer product can be achieved by known methods, for example, by devolatilization or distillation. In some embodiments the bulk of any solvent can be removed and any residual volatile species can be removed from the polymer product by devolatilization or distillation, optionally at reduced pressure. In other embodiments the polymerization reaction is taken to some desired level of completion in solvent and then the polymerization is essentially completed and most remaining water is removed during a devolatilization step following the initial reaction in solution. Apparatuses to devolatilize the polymer mixture and reduce solvent and other volatile species to the low levels needed for good melt processability are generally capable of high temperature heating under vacuum with the ability to rapidly generate high surface area to facilitate removal of the volatile species. The mixing portions of such apparatuses are generally capable of supplying sufficient power to pump, agitate, and stir the high temperature, polyetherimide melt which can be very viscous. Suitable devolatilization apparatuses include, but are not limited to, wiped films evaporators, for example those made by the LUWA Company and devolatilizing extruders, especially twin screw extruders with multiple venting sections, for example those made by the Werner Pfleiderer Company or Welding Engineers.

In some embodiments the polyetherimide has a glass transition temperature of 200 to 280°C.

It is often useful to melt filter the polyetherimide using known melt filtering techniques to remove foreign material, carbonized particles, cross-linked resin, or similar impurities. Melt filtering can occur during initial polymer isolation or in a subsequent step. The polyetherimide can be melt filtered in the extrusion operation. Melt filtering can be performed using a filter with pore size sufficient to remove particles with a dimension of greater than or equal to 100 micrometers or with a pore size sufficient to remove particles with a dimension of greater than or equal to 40 micrometers.

The polyetherimide composition can optionally comprise additives such as UV absorbers; stabilizers such as light stabilizers and others, lubricants, plasticizers, pigments, dyes, colorants, anti-static agents, metal deactivators, and combinations comprising at least one of the foregoing additives. In some embodiments, the additive can include a combination of a mold release agent and a stabilizer comprising phosphite stabilizers, phosphonite stabilizers, hindered phenol stabilizers, and combinations comprising at least one of the foregoing stabilizers. In an embodiment, a phosphorus-containing stabilizer is used.

Antioxidants can be compounds such as phosphites, phosphonites, hindered phenols, or combinations comprising at least one of the foregoing antioxidants. Phosphorus-containing stabilizers including triaryl phosphites and aryl phosphonates are of note as useful additives. Difunctional phosphorus containing compounds can also be employed. In some embodiments, to prevent loss of the stabilizer during melt mixing or subsequent melt forming processes such as injection molding, the phosphorus containing stabilizers with a molecular weight greater than or equal to 300 Dalton, but less than or equal to 5,000 Dalton, are useful. The additive can comprise hindered phenols with molecular weight over 500 Dalton. Phosphorus-containing stabilizers can be present in the composition at 0.01 to 3.0% or to 1.0% by weight of the total composition.

The fibrous substrates further comprise fibers composed of materials other than the polyetherimide. The other fibers can be high strength, heat resistant organic fibers such as aromatic polyamides (including homopolymers and copolymers), aromatic polyester fibers (including homopolymers and copolymers), and aromatic heterocyclic fibers (including homopolymers and copolymers). Such fibers can have a strength of about 10 grams-force per denier (g/D) to about 50 g/D, specifically 15 g/D to 50 g/D, and a pyrolysis temperature of greater than 300°C, specifically greater than about 350°C (1 g/D = 8.830 centiNewton/tex). As used herein, an "aromatic" polymer contains at least 85 mole % of the polymer linkages (e.g., -CO-NH-) attached directly to two aromatic rings.

In one embodiment, the polyetherimides include a polyetherimide thermoplastic resin composition, comprising: (a) a polyetherimide resin, and (b) a phosphorus-containing stabilizer, in an amount that is effective to increase the melt stability of the polyetherimide resin, wherein the phosphorus-containing stabilizer exhibits a low volatility such that, as measured by thermogravimetric analysis of an initial amount of a sample of the phosphorus-containing stabilizer, greater than or equal to 10 percent by weight of the initial amount of the sample remains unevaporated upon heating of the sample from room temperature to 300°C at a heating rate of 20°C per minute under an inert atmosphere. In one embodiment, the phosphorous-containing stabilizer has a formula P-Rₐ, where R' is independently H, alkyl, alkoxy, aryl, aryloxy, or oxy substituent and a is 3 or 4. Examples of such suitable stabilized polyetherimides can be found in U.S. Pat. No. 6,001,957.

Aromatic polyamide fibers are also known as aramid fibers, which can be broadly categorized as para-aramid fibers or meta-aramid fibers. Illustrative examples of para-aramid fibers include poly(p-phenylene terephthalamide) fibers (produced, e.g., by E. I. Du Pont de Nemours and Company and Du Pont-Toray Co., Ltd. under the trademark KEVLAR®), p-phenylene terephthalamide/p-phenylene 3,4'-diphenylene ether terephthalamide copolymer fibers (produced by Teijin Ltd. under the trade name TECHNORA), (produced by Teijin Ltd. under the trade name designation TWARON), or combinations comprising at least one of the foregoing aramids. Illustrative examples of meta-aramid fibers include poly(m-phenylene terephthalamide) fibers (produced, e.g., by E. I. Du Pont de Nemours and Company under the trademark NOMEX®). Such aramid fibers can be produced by methods known to one skilled in the art.

Wholly aromatic polyester fibers include liquid crystal polyesters. Illustrative examples of such wholly aromatic polyester fibers include self-condensed polymers of p-hydroxybenzoic acid, polyesters comprising repeat units derived from terephthalic acid and hydroquinone, polyester fibers comprising repeat units derived from p-hydroxybenzoic acid and 6-hydroxy-2-naphthoic acid, or combinations thereof. A specific wholly aromatic liquid crystal polyester fiber is produced by the polycondensation of 4-hydroxybenzoic acid and 6-hydroxynaphthalene-2-carboxylic acid (commercially available from Kuraray Co., Ltd. under the trade name designation VECTRAN). Such wholly aromatic polyester fibers can be produced by any methods known to one skilled in the art.

Illustrative examples of aromatic heterocyclic fibers include poly(p-phenylene benzobisthiazole) fibers, poly(p-phenylene benzobisoxazole) fibers (PBO), polybenzimidazole fibers, or combinations comprising at least one of the foregoing fibers. PBO fibers are commercially available from Toyobo Co., Ltd. under the trade name designation ZYLON.

In a specific embodiment, the aramid fibers are para-type homopolymers, for example poly(p-phenylene terephthalamide) fibers.

The fibrous substrate can also comprise polycarbonate fibers. Polycarbonates are polymers having repeating structural carbonate units (1) 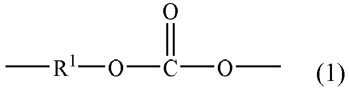 in which at least 60 percent of the total number of R¹ groups contain aromatic moieties and the balance thereof are aliphatic, alicyclic, or aromatic. In an embodiment, each R¹ is a C₆₋₃₀ aromatic group. R¹ can be derived from an aromatic dihydroxy compound of the formula HO-R¹-OH, in particular (2)

HO-A¹-Y¹-A²-OH (2)

wherein each of A¹ and A² is a monocyclic divalent aromatic group and Y¹ is a single bond or a bridging group having one or more atoms that separate A¹ from A². In an exemplary embodiment, one atom separates A¹ from A². Also included are compounds (3) 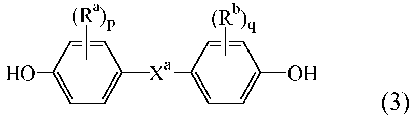 wherein R^{a} and R^{b} are each independently a halogen atom or a monovalent hydrocarbon group and can be the same or different; p and q are each independently integers of 0 to 4; and X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group. In an embodiment, the bridging group X^{a} is a single bond, -O-, -S-, -S(O)-, -S(O)₂-, -C(O)-, or a C₁₋₁₈ organic group. The C₁₋₁₈ organic bridging group can be cyclic or acyclic, aromatic or non-aromatic, and can further comprise heteroatoms such as a halogen, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. In particular, X^{a} is a C₁₋₁₈ alkylene group, a C₃₋₁₈ cycloalkylene group, or a fused C₆₋₁₈ cycloalkylene group, or a group of the formula -B¹-W-B²- wherein B¹ and B² are the same or different C₁₋₆ alkylene group and W is a C₃₋₁₂ cycloalkylidene group or a C₆₋₁₆ arylene group.

Exemplary C₁₋₁₈ organic bridging groups include methylene, cyclohexylmethylene, ethylidene, neopentylidene, and isopropylidene, as well as 2-[2.2.1]-bicycloheptylidene and cycloalkylidenes such as cyclohexylidene, cyclopentylidene, cyclododecylidene, and adamantylidene. A specific example of bisphenol (3) wherein X^{a} is a substituted cycloalkylidene is the cyclohexylidene-bridged, alkyl-substituted bisphenol (4) 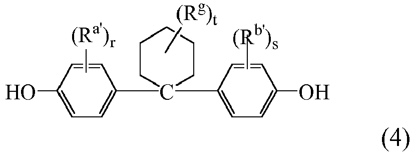 wherein R^{a'} and R^{b'} are each independently C₁₋₁₂ alkyl, R^{g} is C₁₋₁₂ alkyl or halogen, r and s are each independently 1 to 4, and t is 0 to 10. In a specific embodiment, R^{a'} and R^{b'} are disposed meta to the cyclohexylidene bridging group. The substituents R^{a'}, R^{b'} and R^{g} can, when comprising an appropriate number of carbon atoms, be a straight chain, cyclic, bicyclic, branched, saturated, or unsaturated. In an embodiment, R^{a'} and R^{b'} are each independently C₁₋₄ alkyl, R^{g} is C₁₋₄ alkyl, r and s are each 1, and t is 0 to 5. In another specific embodiment, R^{a'}, R^{b'} and R^{g} are each methyl, r and s are each 1, and t is 0 or 3. In another exemplary embodiment, the cyclohexylidene-bridged bisphenol is the reaction product of two moles of a cresol with one mole of a hydrogenated isophorone (e.g., 1,1,3-trimethyl-3-cyclohexane-5-one).

X^{a} in bisphenol (3) can also be a substituted C₃₋₁₈ cycloalkylidene (5) 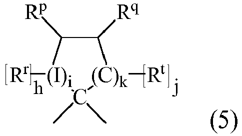 wherein R^{r}, R^{p}, R^{q}, and R^{t} are independently hydrogen, halogen, oxygen, or C₁₋₁₂ organic groups; I is a direct bond, a carbon, or a divalent oxygen, sulfur, or -N(Z)- where Z is hydrogen, halogen, hydroxy, C₁₋₁₂ alkyl, C₁₋₁₂ alkoxy, or C₁₋₁₂ acyl; h is 0 to 2, j is 1 or 2, i is an integer of 0 or 1, and k is an integer of 0 to 3, with the proviso that at least two of R^{r}, R^{p}, R^{q}, and R^{t} taken together are a fused cycloaliphatic, aromatic, or heteroaromatic ring. It will be understood that where the fused ring is aromatic, the ring as shown in formula (5) will have an unsaturated carbon-carbon linkage where the ring is fused. When k is one and i is 0, the ring as shown in formula (5) contains 4 carbon atoms, when k is 2, the ring as shown in formula (5) contains 5 carbon atoms, and when k is 3, the ring contains 6 carbon atoms. In an embodiment, two adjacent groups (e.g., R^{q} and R^{t} taken together) form an aromatic group, and in another embodiment, R^{q} and R^{t} taken together form one aromatic group and R^{r} and R^{p} taken together form a second aromatic group. When R^{q} and R^{t} taken together form an aromatic group, R^{p} can be a double-bonded oxygen atom, i.e., a ketone.

In another specific embodiment of the bisphenol compound (3), the C₁₋₁₈ organic bridging group includes groups -C(R^{c})(R^{d})- or -C(=R^{e})-, wherein R^{c} and R^{d} are each independently a hydrogen atom or a monovalent linear or cyclic hydrocarbon group and R^{e} is a divalent hydrocarbon group, p and q is each 0 or 1, and R^{a} and R^{b} are each a C₁₋₃ alkyl group, specifically methyl, disposed meta to the hydroxy group on each arylene group.

Other useful aromatic dihydroxy compounds of the formula HO-R¹-OH include compounds (14) 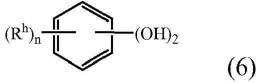 wherein each R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0 to 4. The halogen is usually bromine.

Some illustrative examples of specific aromatic dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or combinations comprising at least one of the foregoing dihydroxy compounds.

Specific examples of bisphenol compounds (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used. In one specific embodiment, the polycarbonate is a linear homopolymer derived from bisphenol A, in which each of A¹ and A² is p-phenylene and Y¹ is isopropylidene in formula (13).

"Polycarbonate" as used herein includes homopolycarbonates (wherein each R¹ in the polymer is the same), copolymers comprising different R¹ moieties in the carbonate units (referred to herein as "copolycarbonates"), copolymers comprising carbonate units and other types of polymer units, such as ester units, and combinations comprising homopolycarbonate and/or copolycarbonate. As used herein, a "combination" is inclusive of blends, mixtures, alloys, reaction products, and the like.

A specific polycarbonate copolymer is a poly(carbonate-ester). Such copolymers further contain, in addition to recurring carbonate units (1), repeating units (7) 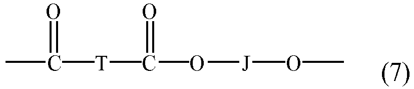 wherein J is a divalent group derived from a dihydroxy compound, and can be, for example, a C₂₋₁₀ alkylene group, a C₆₋₂₀ alicyclic group, a C₆₋₂₀ aromatic group or a polyoxyalkylene group in which the alkylene groups contain 2 to about 6 carbon atoms, specifically 2, 3, or 4 carbon atoms; and T divalent group derived from a dicarboxylic acid, and can be, for example, a C₂₋₁₀ alkylene group, a C₆₋₂₀ alicyclic group, a C₆₋₂₀ alkyl aromatic group, or a C₆₋₂₀ aromatic group. Poly(carbonate-ester)s containing a combination of different T and/or J groups can be used. The poly(carbonate-ester)s can be branched or linear.

In an embodiment, J is a C₂₋₃₀ alkylene group having a straight chain, branched chain, or cyclic (including polycyclic) structure. In another embodiment, J is derived from an aromatic dihydroxy compound (3). In another embodiment, J is derived from an aromatic dihydroxy compound (4). In another embodiment, J is derived from an aromatic dihydroxy compound (6).

Exemplary aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination comprising at least one of the foregoing acids. Acids containing fused rings can also be present, such as in 1,4-, 1,5-, or 2,6-naphthalenedicarboxylic acids. Specific dicarboxylic acids include terephthalic acid, isophthalic acid, naphthalene dicarboxylic acid, cyclohexane dicarboxylic acid, or a combination comprising at least one of the foregoing acids. A specific dicarboxylic acid comprises a combination of isophthalic acid and terephthalic acid wherein the weight ratio of isophthalic acid to terephthalic acid is about 91:9 to about 2:98. In another specific embodiment, J is a C₂₋₆ alkylene group and T is p-phenylene, m-phenylene, naphthalene, a divalent cycloaliphatic group, or a combination comprising at least one of the foregoing.

The molar ratio of carbonate units to ester units in the copolymers can vary broadly, for example 1:99 to 99:1, specifically 10:90 to 90:10, more specifically 25:75 to 75:25, depending on the desired properties of the final composition.

A specific embodiment of a poly(carbonate-ester) (8) comprises recurring aromatic carbonate and aromatic ester units 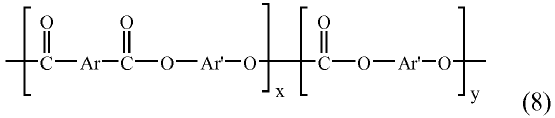 wherein Ar is divalent aromatic residue of a dicarboxylic acid or combination of dicarboxylic acids, and Ar' is a divalent aromatic residue of a bisphenol (3) or a dihydric compound (6). Ar is thus an aryl group, and is more specifically the residue of isophthalic acid (9a), terephthalic acid (9b), 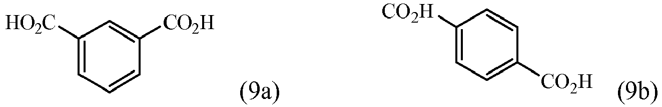 or a combination comprising at least one of the foregoing. Ar' can be polycyclic, e.g., a residue of biphenol or bisphenol A, or monocyclic, e.g., the residue of hydroquinone or resorcinol.

Further in the poly(carbonate-ester) (8), x and y represent the respective parts by weight of the aromatic ester units and the aromatic carbonate units based on 100 parts total weight of the copolymer. Specifically, x, the aromatic ester content, is 20 to 100, specifically 30 to 95, still more specifically 50 to 95 parts by weight, and y, the carbonate content, is more than zero to 80, specifically 5 to 70, still more specifically 5 to 50 parts by weight. In general, any aromatic dicarboxylic acid used in the preparation of polyesters can be utilized in the preparation of poly(carbonate-ester)s (8) but terephthalic acid alone can be used, or mixtures thereof with isophthalic acid wherein the weight ratio of terephthalic acid to isophthalic acid is in the range of 5:95 to 95:5. In this embodiment, the poly(carbonate-ester)s (8) can be derived from reaction of bisphenol-A and phosgene with iso- and terephthaloyl chloride, and can have an intrinsic viscosity of 0.5 to 0.65 deciliters per gram (measured in methylene chloride at a temperature of 25°C). Copolymers of formula (8) comprising 35 to 45 wt.% of carbonate units and 55 to 65 wt.% of ester units, wherein the ester units have a molar ratio of isophthalate to terephthalate of 45:55 to 55:45 are often referred to as poly(carbonate-ester)s (PCE) and copolymers comprising 15 to 25 wt.% of carbonate units and 75 to 85 wt.% of ester units having a molar ratio of isophthalate to terephthalate from 98:2 to 88:12 are often referred to as poly(phthalate-carbonate)s (PPC).

In another specific embodiment, the poly(carbonate-ester) comprises carbonate units (1) derived from a bisphenol compound (3), and ester units derived from an aromatic dicarboxylic acid and dihydroxy compound (6). Specifically, the ester units are arylate ester units (9) 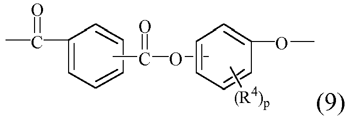 wherein each R⁴ is independently a halogen or a C₁₋₄ alkyl, and p is 0 to 3. The arylate ester units can be derived from the reaction of a mixture of terephthalic acid and isophthalic acid or chemical equivalents thereof with compounds such as 5-methyl resorcinol, 5-ethyl resorcinol, 5-propyl resorcinol, 5-butyl resorcinol, 5-t-butyl resorcinol, 2,4,5-trifluoro resorcinol, 2,4,6-trifluoro resorcinol, 4,5,6-trifluoro resorcinol, 2,4,5-tribromo resorcinol, 2,4,6-tribromo resorcinol, 4,5,6-tribromo resorcinol, catechol, hydroquinone, 2-methyl hydroquinone, 2-ethyl hydroquinone, 2-propyl hydroquinone, 2-butyl hydroquinone, 2-t-butyl hydroquinone, 2,3,5-trimethyl hydroquinone, 2,3,5-tri-t-butyl hydroquinone, 2,3,5-trifluoro hydroquinone, 2,3,5-tribromo hydroquinone, or a combination comprising at least one of the foregoing compounds. The ester units can be poly(isophthalate-terephthalate-resorcinol ester) units, also known as "ITR" esters.

The poly(carbonate-ester)s comprising ester units (9) can comprise, based on the total weight of the copolymer, 1 to less than 100 wt.%, 10 to less than 100 wt.%, 20 to less than 100 wt.%, or 40 to less than 100 wt.% of carbonate units (1) derived from a bisphenol compound (3), and greater than 0 to 99 wt.%, greater than 0 to 90 wt.%, greater than 0 to 80 wt.%, or greater than 0 to 60 wt.% of ester units derived from an aromatic dicarboxylic acid and dihydroxy compound (6). A specific poly(carbonate-ester) comprising arylate ester units (9) is a poly(bisphenol-A carbonate)-co-poly(isophthalate-terephthalate-resorcinol ester).

In another specific embodiment, the poly(carbonate-ester) contains carbonate units (1) derived from a combination of a bisphenol (3) and a dihydroxy compound (6), and arylate ester units (9). The molar ratio of carbonate units derived from dihydroxy compound (3) to carbonate units derived from dihydroxy compound (6) can be 1:99 to 99:1. A specific poly(carbonate-ester) of this type is a poly(bisphenol-A carbonate)-co-(resorcinol carbonate)-co(isophthalate-terephthalate-resorcinol ester).

Polycarbonates can be manufactured by processes such as interfacial polymerization and melt polymerization. Although the reaction conditions for interfacial polymerization can vary, an exemplary process generally involves dissolving or dispersing a dihydric phenol reactant in aqueous caustic soda or potash, adding the resulting mixture to a water-immiscible solvent medium, and contacting the reactants with a carbonate precursor in the presence of a catalyst such as triethylamine and/or a phase transfer catalyst, under controlled pH conditions, e.g., about 8 to about 12. The most commonly used water immiscible solvents include methylene chloride, 1,2-dichloroethane, chlorobenzene, toluene, and the like.

Exemplary carbonate precursors include a carbonyl halide such as carbonyl bromide or carbonyl chloride, or a haloformate such as a bishaloformates of a dihydric phenol (e.g., the bischloroformates of bisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors can also be used. In an exemplary embodiment, an interfacial polymerization reaction to form carbonate linkages uses phosgene as a carbonate precursor, and is referred to as a phosgenation reaction.

Among the phase transfer catalysts that can be used are catalysts of the formula (R³)₄Q⁺X, wherein each R³ is the same or different, and is a C₁₋₁₀ alkyl group; Q is a nitrogen or phosphorus atom; and X is a halogen atom or a C₁₋₈ alkoxy group or C₆₋₁₈ aryloxy group. Exemplary phase transfer catalysts include, for example, [CH₃(CH₂)₃]₄NX, [CH₃(CH₂)₃]₄PX, [CH₃(CH₂)₅]₄NX, [CH₃(CH₂)₆]₄NX, [CH₃(CH₂)₄]₄NX, CH₃[CH₃(CH₂)₃]₃NX, and CH₃[CH₃(CH₂)₂]₃NX, wherein X is Cl⁻, Br⁻, a C₁₋₈ alkoxy group or a C₆₋₁₈ aryloxy group. An effective amount of a phase transfer catalyst can be about 0.1 to about 10 wt.% based on the weight of bisphenol in the phosgenation mixture. In another embodiment, an effective amount of phase transfer catalyst can be about 0.5 to about 2 wt.% based on the weight of bisphenol in the phosgenation mixture.

All types of polycarbonate end groups are contemplated as being useful in the polycarbonate composition, provided that such end groups do not significantly adversely affect desired properties of the compositions.

Branched polycarbonate blocks can be prepared by adding a branching agent during polymerization. These branching agents include polyfunctional organic compounds containing at least three functional groups comprising hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of about 0.05 to about 2.0 wt.%. Mixtures comprising linear polycarbonates and branched polycarbonates can be used.

A chain stopper (also referred to as a capping agent) can be included during polymerization. The chain stopper limits molecular weight growth rate, and so controls molecular weight in the polycarbonate. Exemplary chain stoppers include certain mono-phenolic compounds, mono-carboxylic acid chlorides, and/or mono-chloroformates. Mono-phenolic chain stoppers are exemplified by monocyclic phenols such as phenol and C₁-C₂₂ alkyl-substituted phenols such as p-cumyl-phenol, resorcinol monobenzoate, and p-and tertiary-butyl phenol; and monoethers of diphenols, such as p-methoxyphenol. Alkyl-substituted phenols with branched chain alkyl substituents having 8 to 9 carbon atom can be specifically mentioned. Certain mono-phenolic UV absorbers can also be used as a capping agent, for example 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like.

Mono-carboxylic acid chlorides can also be used as chain stoppers. These include monocyclic, mono-carboxylic acid chlorides such as benzoyl chloride, C₁-C₂₂ alkyl-substituted benzoyl chloride, toluoyl chloride, halogen-substituted benzoyl chloride, bromobenzoyl chloride, cinnamoyl chloride, 4-nadimidobenzoyl chloride, or combination comprising at least one of the foregoing chlorides; polycyclic, mono-carboxylic acid chlorides such as trimellitic anhydride chloride, and naphthoyl chloride; and combinations comprising at least one of the foregoing monocyclic and polycyclic mono-carboxylic acid chlorides. Chlorides of aliphatic monocarboxylic acids with less than or equal to about 22 carbon atoms are useful. Functionalized chlorides of aliphatic monocarboxylic acids, such as acryloyl chloride and methacryoyl chloride, are also useful. Also useful are mono-chloroformates including monocyclic, mono-chloroformates, such as phenyl chloroformate, alkyl-substituted phenyl chloroformate, p-cumyl phenyl chloroformate, toluene chloroformate, and combination comprising at least one of the foregoing chloroformates.

Alternatively, melt processes can be used to make the polycarbonates. Generally, in the melt polymerization process, polycarbonates can be prepared by co-reacting, in a molten state, the dihydroxy reactant(s) and a diaryl carbonate ester, such as diphenyl carbonate, in the presence of a transesterification catalyst in a Banbury^{®} mixer, twin screw extruder, or the like to form a uniform dispersion. Volatile monohydric phenol is removed from the molten reactants by distillation and the polymer is isolated as a molten residue. A specifically useful melt process for making polycarbonates uses a diaryl carbonate ester having electron-withdrawing substituents on the aryls. Examples of specifically useful diaryl carbonate esters with electron withdrawing substituents include bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, bis(4-acetylphenyl) carboxylate, or a combination comprising at least one of the foregoing esters. In addition, useful transesterification catalysts can include phase transfer catalysts of formula (R³)₄Q⁺X, wherein each R³, Q, and X are as defined above. Exemplary transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of the foregoing transesterification catalysts.

The polyester-polycarbonates in particular can also be prepared by interfacial polymerization as described above with respect to polycarbonates generally. Rather than utilizing the dicarboxylic acid or diol per se, the reactive derivatives of the acid or diol, such as the corresponding acid halides, in particular the acid dichlorides and the acid dibromides can be used. Thus, for example instead of using isophthalic acid, terephthalic acid, or a combination comprising at least one of the foregoing acids, isophthaloyl dichloride, terephthaloyl dichloride, or a combination of the foregoing dichlorides can be used.

The polycarbonates can have an intrinsic viscosity, as determined in chloroform at 25°C, of 0.3 to 1.5 deciliters per gram (dl/gm), specifically 0.45 to 1.0 dl/gm. The polycarbonates can have a weight average molecular weight of 10,000 to 200,000 Daltons, specifically 20,000 to 100,000 Daltons, as measured by gel permeation chromatography (GPC), using a cross-linked styrene-divinylbenzene column and calibrated to polycarbonate references. GPC samples are prepared at a concentration of 1 mg per ml, and are eluted at a flow rate of 1.5 ml per minute. Combinations of polycarbonates of different flow properties can be used to achieve the overall desired flow property. In an embodiment, polycarbonates are based on bisphenol A, in which each of A³ and A⁴ is p-phenylene and Y² is isopropylidene. The weight average molecular weight of the polycarbonate can be 5,000 to 100,000 Daltons, or, more specifically 10,000 to 65,000 Daltons, or, even more specifically, 15,000 to 35,000 Daltons as determined by GPC as described above.

The polyester-polycarbonates in particular are generally of high molecular weight and have an intrinsic viscosity, as determined in chloroform at 25°C of 0.3 to 1.5 dl/gm, and more specifically 0.45 to 1.0 dl/gm. These polyester-polycarbonates can be branched or unbranched and generally will have a weight average molecular weight of 10,000 to 200,000, more specifically 20,000 to 100,000 as measured by gel permeation chromatography.

Polycarbonates containing poly(carbonate-siloxane) blocks can be used. The polysiloxane blocks are polydiorganosiloxane, comprising repeating diorganosiloxane units as in formula (10) 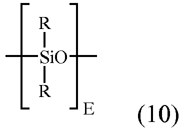 wherein each R is independently the same or different C₁₋₁₃ monovalent organic group. For example, R can be a C₁-C₁₃ alkyl, C₁-C₁₃ alkoxy, C₂-C₁₃ alkenyl group, C₂-C₁₃ alkenyloxy, C₃-C₆ cycloalkyl, C₃-C₆ cycloalkoxy, C₆-C₁₄ aryl, C₆-C₁₀ aryloxy, C₇-C₁₃ arylalkyl, C₇-C₁₃ aralkoxy, C₇-C₁₃ alkylaryl, or C₇-C₁₃ alkylaryloxy. The foregoing groups can be fully or partially halogenated with fluorine, chlorine, bromine, or iodine, or a combination comprising at least one of the foregoing halogens. In an embodiment, where a transparent polysiloxane-polycarbonate is desired, R is unsubstituted by halogen. Combinations of the foregoing R groups can be used in the same copolymer.

The value of E in formula (10) can vary widely depending on the type and relative amount of each component in the thermoplastic composition, the desired properties of the composition, and like considerations. Generally, E has an average value of 2 to about 1,000, specifically about 2 to about 500, more specifically about 5 to about 100. In an embodiment, E has an average value of about 10 to about 75, and in still another embodiment, E has an average value of about 40 to about 60. Where E is of a lower value, e.g., less than about 40, it can be desirable to use a relatively larger amount of the polycarbonate-polysiloxane copolymer. Conversely, where E is of a higher value, e.g., greater than about 40, a relatively lower amount of the polycarbonate-polysiloxane copolymer can be used.

A combination of a first and a second (or more) poly(carbonate-siloxane) copolymers can be used, wherein the average value of E of the first copolymer is less than the average value of E of the second copolymer.

In an embodiment, the polydiorganosiloxane blocks are of formula (11) 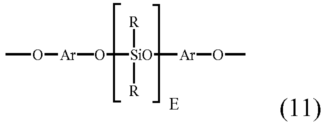 wherein E is as defined above; each R can be the same or different, and is as defined above; and Ar can be the same or different, and is a substituted or unsubstituted C₆-C₃₀ arylene group, wherein the bonds are directly connected to an aromatic moiety. Ar groups in formula (11) can be derived from a C₆-C₃₀ dihydroxyarylene compound, for example a dihydroxyarylene compound of formula (3) or (6) above. Exemplary dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used.

In another embodiment, polydiorganosiloxane blocks are of formula (12) 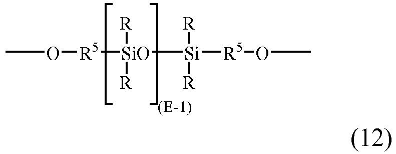 wherein R and E are as described above, and each R⁵ is independently a divalent C₁-C₃₀ organic group, and wherein the polymerized polysiloxane unit is the reaction residue of its corresponding dihydroxy compound.

In a specific embodiment, the polydiorganosiloxane blocks are of formula (13) 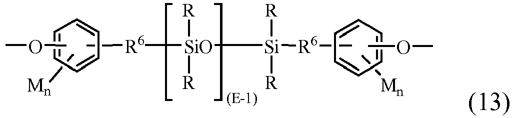 wherein R and E are as defined above. R⁶ in formula (13) is a divalent C₂-C₈ aliphatic group. Each M in formula (14) can be the same or different, and can be a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy, wherein each n is independently 0, 1, 2, 3, or 4.

In an embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; R² is a dimethylene, trimethylene or tetramethylene group; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, M is methoxy, n is one, R² is a divalent C₁-C₃ aliphatic group, and R is methyl.

Blocks of formula (13) can be derived from the corresponding dihydroxy polydiorganosiloxane (14) 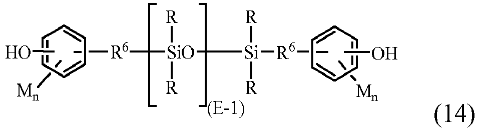 wherein R, E, M, R⁶, and n are as described above. Such dihydroxy polysiloxanes can be made by effecting a platinum-catalyzed addition between a siloxane hydride of formula (15) 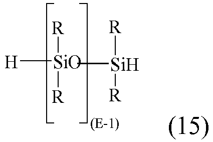 wherein R and E are as previously defined, and an aliphatically unsaturated monohydric phenol. Exemplary aliphatically unsaturated monohydric phenols include eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. Combinations comprising at least one of the foregoing phenols can also be used.

The poly(carbonate-siloxane)s can comprise 50 to 99 wt.% of carbonate units and 1 to 50 wt.% siloxane units. Within this range, the poly(carbonate-siloxane)s can comprise 70 to 98 wt.%, more specifically 75 to 97 wt.% of carbonate units and 2 to 30 wt.%, more specifically 3 to 25 wt.% siloxane units.

The poly(carbonate-siloxane)s can have a weight average molecular weight of 2,000 to 100,000 Daltons, specifically 5,000 to 50,000 Daltons as measured by gel permeation chromatography using a cross-linked styrene-divinyl benzene column, at a sample concentration of 1 milligram per milliliter, and as calibrated with polycarbonate standards.

The poly(carbonate-siloxane) can have a melt volume flow rate, measured at 300°C/1.2 kg, of 1 to 50 cubic centimeters per 10 minutes (cc/10 min), specifically 2 to 30 cc/10 min. Mixtures of polyorganosiloxane-polycarbonates of different flow properties can be used to achieve the overall desired flow property.

The foregoing polycarbonates can be used alone or in combination, for example a combination of a homopolycarbonate and at least one poly(carbonate-ester), or a combination of two or more poly(carbonate-ester)s. Blends of different poly(carbonate-ester)s can be used in these compositions.

A specific polycarbonate copolymer is Lexan FST 9705, a poly(carbonate-resorcinol-siloxane) polymer available from SABIC Innovative Plastics.

Other polymers such as amorphous PET (polyethylene terephthalate) can be substituted for polycarbonate polymer if flame performance is not an issue. Other high temperature polymers such as PEEK (polyether ether ketone) polymer can be used when available as fine fiber. High temperature polyimides could be used as the reinforcing fiber in combination with liquid crystal polymer as the continuous phase film former to make a much higher temperature capable honeycomb paper with very high resistance to jet fuels. In such an embodiment, the un-melted fibers, are referred to as reinforcing fibers within the structures here described regardless of whether the fibers, such as polyimide fibers, act as reinforcing fibers in the composition.

In some embodiments, the polymers of the fibrous substrate could also be combined during a fiber extrusion process known as bi-component fiber extrusion. In such embodiments, a first polymer can be melt spun along with a second polymer to form a core/sheath fiber according to known methods. Methods for making bi-component and multicomponent fibers are well known and need not be described here in detail. For example, U.S. Patent 5,227,109 describes forming bi-component fibers in a sheath-core relationship in a spinning pack that incorporates a plurality of adjacent plates that define selected flow paths therein for a sheath component and a core component to direct the respective components into the sheath-core relationship. In addition, more complex multicomponent fiber morphologies can be considered within the term core sheath as used herein, such as disclosed in U.S. Patent 5,458,972 describes a method of producing a multicomponent trilobal fiber using a trilobal capillary defining three legs, three apexes and an axial center, by directing a first molten polymer composition to the axial center and presenting a second molten polymer composition to at least one of the apexes. The fiber produced has a trilobal core defining an outer core surface and a sheath abutting at least about one-third of the outer core surface.

In various embodiments, the first polymer can be the core fiber while the second polymer is the sheath fiber, or the second polymer can be the core fiber while the first polymer is the sheath fiber. The first and second polymer can be any of the polymers described above in the context of the useful fibers.

In an embodiment, polyetherimide would be the core and polycarbonate would be the outer layer. The embodiment would make bonding the fibers in the mat more uniform. In another embodiment, the liquid crystal polymer would be the core and the polyetherimide the outer layer. This embodiment would improve the uniformity of dispersion of the materials over a given area in construction of the paper. This embodiment could also allow for the production of finer fiber, which is critical for uniform dispersion in very thin products such as this.

The honeycomb paper can be made using known paper making techniques, such as on cylinder or fourdrinier paper making machines. In general, fibers are chopped and refined to obtain the proper fiber size. The synthetic fibers and binder are added to water to form a mixture of fibers and water.

The mixture then is screened to drain the water from the mixture to form a sheet of paper. The screen tends to orient the fibers in the direction in which the sheet is moving, which is referred to as the machine direction. Consequently, the resulting insulation paper has a greater tensile strength in the machine direction than in the perpendicular direction, which is referred to as the cross direction. The sheet of paper is fed from the screen onto rollers and through other processing equipment that removes the water in the paper.

When the fibrous mat is processed on a static press it is specifically under vacuum to produce a bubble-free consolidated mat.

The fibrous substrate can be prepared at an aereal density of 5 to 200 GSM (grams per square meter), specifically 30 to 120 GSM and more specifically 40 to 80 GSM. In an embodiment, the density of the fibrous substrate is 40 to 80 GSM and the substrate has sufficient porosity to allow penetration by varnish which sets to reinforce the shape of the final honeycomb paper. In another embodiment, the density of the substrate is 80 to 120 GSM, the substrate is not as porous and no varnish is needed for added strength. In another embodiment the consolidated fibrous substrate has a density of 80 GSM.

Methods of measuring porosity are known to those skilled in the art, such as ISO 5636-5:2003. In this technique, the Gurley second or Gurley unit is a unit describing the number of seconds required for 100 cubic centimeters (1 deciliter) of air to pass through 1.0 square inch of a given material at a pressure differential of 4.88 inches of water (0.188 psi), which is also expressed as square inch seconds per deciliter (s·in²/dl). In SI units, 1 s·in²/dl = 6.4516 seconds per meter column of air (s/m). In another aspect, the honeycomb paper has a porosity of greater than 20 to less than 120 s·in²/dl (Gurley second) or greater than 129 to less than 774 second per meter column of air.

The consolidated mat can be prepared in any thickness suitable to the intended application. In general, consistent thickness is desirable. In some embodiments, the average thickness of the mat is more than 0 to less than 2 millimeters. In other embodiments the thickness is more than 0 to less than 1 millimeter. In other embodiments the thickness is more than 0 to 800 µm; 10 to 500 µm; 20 to less than 300 µm.

In an embodiment, the honeycomb paper is combined with a protective layer bound to a surface of the honeycomb core to form an article useful in structural applications. Usually, a protective layer is bound to both sides of the honeycomb core. The protective layer can be any generally planar material which can be bound to the honeycomb core. For example the protective layer can be polycarbonate copolymer film, glass fiber mat entrained with polyimide, liquid crystal polymer mat, carbon fiber fabric, flame retardant fabric, or sheet metal.

These honeycomb structural panels are particularly useful in applications where low weight is advantageous for example in transportation, furniture, pallets, and containers.

In an embodiment these panels can be formed into articles which can serve as interior and exterior surfaces such as floors, walls, ceilings, doors, lids, covers, seats, tables, and counters for aircraft, rail, marine, automotive, and construction applications.

The following Examples are illustrative, and non-limiting.

### EXAMPLES

### Materials:

The materials used in the following Examples are summarized in Table 1, below.

**Table 1.**

| Material | Identity | Source |
|---|---|---|
| Polyetherimide fiber | ULTEM, half-inch chopped | Sabic Innovative Plastics |
| Liquid Crystal Polymer fiber | VECTRAN melt-spun fibers | Kuraray Group |
| Polycarbonate copolymer fiber | LEXAN FST Grade designation - FST9705 | Sabic Innovative Plastics |

### Procedures:

Tensile Strength - ASTM D 828
Percent Elongation - ASTM D 828

Laboratory preparation of the mat for the honeycomb paper was done on a small 12" x 12" (305 mm x 305 mm) hand former of a mixture of half inch chopped ULTEM fiber with Vectran^{®} fiber and a minor amount of LEXAN FST fiber to provide sufficient strength to the mat to permit further processing. The wet mat was dried under conditions that melted the LEXAN FST to hold the very light 40 gsm web together. The dry mat was then consolidated between release treated metal plates at 490°F (254°C) for 3 minutes at 28 psi then at 1,100 psi for 8 minutes. The resulting film was 0.002" (5 mm) thick with relatively good clarity and reasonably well dispersed reinforcing fibers that appeared to have survived the process without noticeable deformation, but with a large number of air bubbles. Another sample processed under similar conditions, but under vacuum was almost totally void of the bubbles. Results: The samples produced in the Examples above were tested according to the Procedures described above and the results are summarized on Table 2, below:

**Table 2.**

| Sample Type | Basis Wt., gsm | Caliper, mil (25.4µ) | Tensile Strength, kg/in² (0.155kg/cm²) | Elongation, % |
|---|---|---|---|---|
| Comparative Example A | 40.0±0.4 | 2.6±0.1 | MD=13.1±0.6 | MD=10.2±2.0 |
| | | | CD=4.6±0.4 | CD=3.9±0.8 |
| Comparative Example B | 29.9±0.1 | 2.0±0.1 | MD=7.6±0.9 | MD=1.4±0.1 |
| | | | CD=7.0±0.5 | CD=1.1±0.2 |
| Example 1 | 65.8 | 4.4±0.9 | 16.1±1.2 | 3.3±0.1 |

### Discussion:

The honeycomb paper of Example 1 exhibits superior tensile strength when compared to both the Nomex-based paper of Comparative Example A and the Kevlar-based paper of Comparative Example B. The honeycomb paper of Example 1 had a tensile strength in the machine direction of 16.1 ± 1.2 kg/in, which is superior to the paper of Comparative Example A, which had a tensile strength in the machine direction of 13.1 ± 0.6 kg/in and that of the paper of Comparative Example B, which had a tensile strength in the machine direction oaf 7.6 ± 0.9 kg/in.

In general, the compositions or methods may alternatively comprise, consist of, or consist essentially of, any appropriate components or steps herein disclosed. The invention may additionally, or alternatively, be formulated so as to be devoid, or substantially free, of any components, materials, ingredients, adjuvants, or species, or steps used in the prior art compositions or that are otherwise not necessary to the achievement of the function and/or objectives of the present claims.

"Optional" or "optionally" means that the subsequently described event or circumstance may or may not occur, and that the description includes instances where the event occurs and instances where it does not.

The modifier "about" used in connection with a quantity is inclusive of the stated value and has the meaning dictated by the context (e.g., includes the degree of error associated with measurement of the particular quantity).

The notation "±10%" means that the indicated measurement may be from an amount that is minus 10% to an amount that is plus 10% of the stated value.

The endpoints of all ranges directed to the same component or property are inclusive of the endpoints, are independently combinable, and include all intermediate points and ranges optional: (e.g., ranges of "up to about 25 wt.%, or, more specifically, about 5 wt.% to about 20 wt.%," is inclusive of the endpoints and all intermediate values of the ranges of "about 5 wt.% to about 25 wt.%," such as about 10 wt.% to about 23 wt.%, etc.).

The suffix "(s)" as used herein is intended to include both the singular and the plural of the term that it modifies, thereby including one or more of that term (e.g., the colorant(s) includes one or more colorants).

The terms "first," "second," and the like, "primary," "secondary," and the like, as used herein do not denote any order, quantity, or importance, but rather are used to distinguish one element from another.

The terms "front," "back," "bottom," and/or "top" are used herein, unless otherwise noted, merely for convenience of description, and are not limited to any one position or spatial orientation.

The term "combination" is inclusive of blends, mixtures, alloys, reaction products, and the like.

Unless defined otherwise, technical and scientific terms used herein have the same meaning as is commonly understood by one of skill in the art to which this invention belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The application includes at least the following embodiments.
Embodiment 1: A consolidated fibrous mat comprising 20 to 50 weight percent of reinforcing fibers; and a continuous phase connecting the reinforcing fibers, comprising 50 to 70 weight percent of a polymer having a melt temperature at least 20°C lower than the reinforcing fibers, and 5 to 10 weight percent of a binder having a melt temperature lower than the polymer; wherein the weight percent of each of the reinforcing fibers, the polymer, and the binder is based on the combined total weight of the reinforcing fibers, the polymer, and the binder.
Embodiment 2: The consolidated fibrous mat of Embodiment 1, wherein the reinforcing fibers comprise aromatic polyamide fibers, liquid crystal polymer fibers, or a combination comprising at least one of the foregoing fibers; the continuous phase polymer is a polyetherimide; and the binder comprises polycarbonate copolymer, polyalkylene terephthalate, polyether ether ketone, polyamide, or a combination comprising at least one of the foregoing.
Embodiment 3: The consolidated fibrous mat of Embodiment 1 or 2, wherein the reinforcing fibers are polyetherimide fibers; the continuous phase polymer comprise polyamide, liquid crystal polymer, or a combination comprising at least one of the foregoing polymers; and the binder comprises polycarbonate copolymer, polyalkylene terephthalate, polyether ether ketone, polyamide, or a combination comprising at least one of the foregoing polymers.
Embodiment 4: Honeycomb paper comprising a honeycomb core comprising the consolidated fibrous mat according to any of the preceding Embodiments.
Embodiment 5: The honeycomb paper of Embodiment 4, further comprising a varnish or adhesive deposited on or absorbed within said consolidated fibrous mat.
Embodiment 6: The honeycomb paper of Embodiment 4, further comprising a protective layer bound to a surface of the honeycomb core.
Embodiment 7: The honeycomb paper of any of the preceding Embodiments, wherein said protective layer is polycarbonate copolymer film, glass fiber mat entrained with polyimide, liquid crystal polymer mat, carbon fiber fabric, flame retardant fabric, or sheet metal.
Embodiment 8: An article comprising the honeycomb paper of any of the preceding Embodiments.
Embodiment 9: The article of Embodiment 8 comprising structural panels for use in transportation, furniture, pallets, and containers.
Embodiment 10: The article of Embodiment 8 comprising floors, walls, ceilings, doors, lids, covers, seats, tables and counters for aircraft, rail, marine, automotive, and construction applications.
Embodiment 11: A fibrous layer comprising a combination of: first fibers comprising 20 to 50 weight percent of a reinforcing fiber; 50 to 70 weight percent of a continuous phase polymer fiber having a melt temperature at least 20°C lower than the reinforcing fibers; and 5 to 10 weight percent of binder fibers having a melt temperature lower than that of the continuous phase fibers, wherein the weight percent of each of the fibers is based on the total weight of the fibers in the layer, a thickness of the mat is more than 0 to less than 300 µm, and a porosity of the mat is greater than 129 to less than 774 seconds per meter column of air.
Embodiment 12: The fibrous layer of Embodiment 11, wherein the first fibers comprise a combination of reinforcing fibers comprising liquid crystal polymer fibers, polyamide fibers, or a combination comprising at least one of the foregoing fibers, and continuous phase polymer fibers comprising a polyetherimide; and the binder fibers comprise polycarbonate copolymer fibers, polyalkylene terephthalate fibers, polyether ether ketone fibers, polyamide fibers, or a combination comprising at least one of the foregoing fibers.
Embodiment 13: The fibrous layer of Embodiment 11, wherein the first fibers comprise a combination of polyetherimide reinforcing fibers, and liquid crystal continuous phase polymer fibers; and the binder fibers comprise polycarbonate copolymer fibers, polyalkylene terephthalate fibers, polyether ether ketone fibers, polyamide fibers, or a combination comprising at least one of the foregoing fibers.
Embodiment 14: The fibrous layer of Embodiment 11, wherein the first fibers are multicomponent fibers comprising a reinforcing polyetherimide core and a continuous phase liquid crystal sheath.
Embodiment 15: The fibrous layer of Embodiment 11, wherein the first fibers are multicomponent fibers comprising a reinforcing liquid crystal polymer core and a continuous phase polyetherimide sheath.
Embodiment 16: A method of forming the consolidated fibrous mat of any of the preceding Embodiments, comprising casting the fiber composition in a suspension solvent to form a layer; dewatering the layer; and consolidating the layer to form the consolidated fibrous mat.

## Claims

1. A fibrous layer comprising a combination of:
first fibers comprising
20 to 50 weight percent of a reinforcing fiber;
50 to 70 weight percent of a continuous phase polymer fiber having a melt temperature at least 20°C lower than the reinforcing fibers; and
wherein the first fibers are multicomponent fibers comprising
- a reinforcing polyetherimide core and a continuous phase liquid crystal sheath or
- a reinforcing liquid crystal polymer core and a continuous phase polyetherimide sheath,
5 to 10 weight percent of binder fibers having a melt temperature lower than that of the continuous phase fibers,
wherein the weight percent of each of the fibers is based on the total weight of the fibers in the layer and the thickness of the mat is more than 0 to less than 300 µm..

2. The fibrous layer of Claim 1, wherein
the first fibers comprise a combination of
reinforcing fibers comprising liquid crystal polymer fibers, polyamide fibers, or a combination comprising at least one of the foregoing fibers, and
continuous phase polymer fibers comprising a polyetherimide; and
the binder fibers comprise polycarbonate copolymer fibers, polyalkylene terephthalate fibers, polyether ether ketone fibers, polyamide fibers, or a combination comprising at least one of the foregoing fibers.

3. The fibrous layer of Claim 1, wherein
the first fibers comprise a combination of
polyetherimide reinforcing fibers, and
liquid crystal continuous phase polymer fibers; and
the binder fibers comprise polycarbonate copolymer fibers, polyalkylene terephthalate fibers, polyether ether ketone fibers, polyamide fibers, or a combination comprising at least one of the foregoing fibers.

4. A consolidated fibrous mat prepared from the fibrous layer of Claims 1, 2 or 3.

5. The consolidated fibrous mat of claim 4 wherein the mat has a thickness of more than 0 to less than 300 µm

6. Honeycomb paper comprising a honeycomb core comprising the consolidated fibrous mat according to any of the claims 4 or 5.

7. The honeycomb paper of Claim 6, further comprising a varnish or adhesive deposited on or absorbed within said consolidated fibrous mat.

8. The honeycomb paper of any of the claims 6 or 7, further comprising a protective layer bound to a surface of the honeycomb core.

9. The honeycomb paper of Claim 8, wherein said protective layer is polycarbonate copolymer film, glass fiber mat entrained with polyimide, liquid crystal polymer mat, carbon fiber fabric, flame retardant fabric or sheet metal.

10. An article comprising the honeycomb paper of any of the claims 6 to 9.

11. The article of Claim 10 comprising structural panels for use in transportation, furniture, pallets, and containers.

12. The article of Claim 10 comprising floors, walls, ceilings, doors, lids, covers, seats, tables and counters for aircraft, rail, marine, automotive, and construction applications.

13. A method of forming the consolidated fibrous mat of Claim 4 or 5 , comprising
casting the fiber composition in a suspension solvent to form a layer;
dewatering the layer; and
consolidating the layer to form the consolidated fibrous mat.

## Patentansprüche

1. Faserbasierte Schicht, umfassend eine Kombination aus:
ersten Fasern, die Folgendes umfassen
20 bis 50 Gewichtsprozent einer verstärkenden Faser;
50 bis 70 Gewichtsprozent einer als kontinuierliche Phase vorliegenden Polymerfaser, die eine um mindestens 20 °C niedrigere Schmelztemperatur als die verstärkenden Fasern hat; und
wobei es sich bei den ersten Fasern um Mehrkomponentenfasern handelt, die Folgendes umfassen
- einen verstärkenden Polyetherimidkern und eine Flüssigkristallhülle, welche als kontinuierliche Phase vorliegt oder
- einen verstärkenden Flüssigkristallpolymerkern und eine Polyetherimidhülle, welche als kontinuierliche Phase vorliegt,
5 bis 10 Gewichtsprozent an Bindemittelfasern mit einer Schmelztemperatur, die niedriger als diejenige der Fasern ist, welche als kontinuierliche Phase vorliegen,
wobei der Gewichtsprozentwert der Fasern jeweils auf das Gesamtgewicht der Fasern in der Schicht bezogen ist und die Dicke der Matte mehr als 0 und weniger als 300 µm beträgt.

2. Faserbasierte Schicht nach Anspruch 1, wobei
die ersten Fasern eine Kombination aus Folgendem umfassen
verstärkenden Fasern, die Flüssigkristall-Polymerfasern, Polyamidfasern oder eine Kombination umfassen, welche mindestens eine der vorstehend genannten Fasern umfasst, und
als kontinuierliche Phase vorliegenden Polymerfasern, die ein Polyetherimid umfassen; und
den Bindemittelfasern, wobei diese Polycarbonatcopolymer-Fasern, Polyalkylenterephthalat-Fasern, Polyetheretherketon-Fasern, Polyamidfasern oder eine Kombination umfassen, welche mindestens eine der vorstehend genannten Fasern umfasst.

3. Faserbasierte Schicht nach Anspruch 1, wobei
die ersten Fasern eine Kombination aus Folgendem umfassen
verstärkenden Polyetherimidfasern, und
als kontinuierliche Phase vorliegenden Flüssigkristall-Polymerfasern; und
den Bindemittelfasern, wobei diese Polycarbonatcopolymer-Fasern, Polyalkylenterephthalat-Fasern, Polyetheretherketon-Fasern, Polyamidfasern oder eine Kombination umfassen, welche mindestens eine der vorstehend genannten Fasern umfasst.

4. Verfestigte faserbasierte Matte, die aus der faserbasierten Schicht nach den Ansprüchen 1, 2 oder 3 hergestellt ist.

5. Verfestigte faserbasierte Matte nach Anspruch 4, wobei die Matte eine Dicke von mehr als 0 und weniger als 300 µm hat.

6. Wabenpapier, das einen Wabenkern umfasst, welcher die verfestigte faserbasierte Matte gemäß einem beliebigen der Ansprüche 4 oder 5 umfasst.

7. Wabenpapier nach Anspruch 6, das weiterhin einen Lack oder einen Klebstoff umfasst, der auf die verfestigte faserbasierte Matte aufgebracht oder darin absorbiert ist.

8. Wabenpapier nach einem beliebigen der Ansprüche 6 oder 7, das eine Schutzschicht umfasst, welche an eine Oberfläche der Wabenkerns gebunden ist.

9. Wabenpapier nach Anspruch 8, wobei es sich bei der Schutzschicht um eine Dünnschicht aus Polycarbonatcopolymer, eine Glasfasermatte, die mit Polyimid durchsetzt ist, eine Flüssigkristall-Polymermatte, einen Textilstoff aus Kohlenstofffasern, einen Textilstoff mit Flammschutzwirkung oder um ein Flachelement aus Metall handelt.

10. Gegenstand, der das Wabenpapier nach einem beliebigen der Ansprüche 6 bis 9 umfasst.

11. Gegenstand nach Anspruch 10, der Bauplatten zur Verwendung im Verkehrswesen, Möbeln, Paletten und Behältern umfasst.

12. Gegenstand nach Anspruch 10, der Fußböden, Wände, Raumdecken, Türen, Deckel, Abdeckungen, Sitze, Tische und Tresen für Flugzeuge, für den Schienenverkehr, die Schifffahrt, den Automobilsektor sowie für Bauanwendungen umfasst.

13. Verfahren zur Herstellung der verfestigten faserbasierten Matte nach Anspruch 4 oder 5, das Folgendes umfasst
Gießen der Faserzusammensetzung in einem der Dispersion dienenden Lösungsmittel, um eine Schicht zu bilden;
Entwässern der Schicht; und
Verfestigen der Schicht, um die verfestigte faserbasierte Matte zu bilden.

## Revendications

1. Couche fibreuse comprenant une combinaison de :
premières fibres comprenant
20 à 50 % en poids d'une fibre de renforcement ;
50 à 70 % en poids d'une fibre de polymère à phase continue ayant une température de fusion au moins 20 °C inférieure aux fibres de renforcement ; et dans laquelle les premières fibres sont des fibres multicomposants comprenant
- un noyau de polyétherimide de renforcement et une gaine de cristaux liquides à phase continue ou
- un noyau de polymère à cristaux liquides de renforcement et une gaine de polyétherimide à phase continue,
5 à 10 % en poids de fibres liantes ayant une température de fusion inférieure à celle des fibres à phase continue,
dans laquelle le pourcentage en poids de chacune des fibres est basé sur le poids total des fibres dans la couche et l'épaisseur du mat est de plus de 0 à moins de 300 µm.

2. Couche fibreuse selon la revendication 1, dans laquelle les premières fibres comprennent une combinaison de
fibres de renforcement comprenant des fibres de polymère à cristaux liquides, des fibres de polyamide, ou une combinaison comprenant au moins l'une des fibres précédentes, et
des fibres de polymère à phase continue comprenant un polyétherimide ; et
les fibres liantes comprennent des fibres de copolymère de polycarbonate, des fibres de polytéréphtalate d'alkylène, des fibres de polyéther éther cétone, des fibres de polyamide, ou une combinaison comprenant au moins l'une des fibres précédentes.

3. Couche fibreuse selon la revendication 1, dans laquelle les premières fibres comprennent une combinaison de
fibres de renforcement de polyétherimide, et
de fibres de polymère à phase continue à cristaux liquides ; et
les fibres liantes comprennent des fibres de copolymère de polycarbonate, des fibres de polytéréphtalate d'alkylène, des fibres de polyéther éther cétone, des fibres de polyamide, ou une combinaison comprenant au moins l'une des fibres précédentes.

4. Mat fibreux consolidé préparé à partir de la couche fibreuse selon les revendications 1, 2 ou 3.

5. Mat fibreux consolidé selon la revendication 4, dans lequel le mat a une épaisseur de plus de 0 à moins de 300 µm.

6. Papier en nid d'abeille comprenant un noyau en nid d'abeilles comprenant le mat fibreux consolidé selon l'une quelconque des revendications 4 ou 5.

7. Papier en nid d'abeille selon la revendication 6, comprenant en outre un vernis ou un adhésif déposé sur ou absorbé dans ledit mat fibreux consolidé.

8. Papier en nid d'abeilles selon l'une quelconque des revendications 6 ou 7, comprenant en outre une couche protectrice liée à une surface du noyau en nid d'abeille.

9. Papier en nid d'abeille selon la revendication 8, dans lequel ladite couche protectrice est un film de copolymère de polycarbonate, un mat de fibre de verre imprégné avec du polyimide, un mat de polymère à cristaux liquides, un tissu de fibre de carbone, un tissu ignifuge ou une tôle métallique.

10. Article comprenant le papier en nid d'abeilles selon l'une quelconque des revendications 6 à 9.

11. Article selon la revendication 10, comprenant des panneaux structuraux pour une utilisation dans le transport, le mobilier, les palettes et les conteneurs.

12. Article selon la revendication 10, comprenant des planchers, des murs, des plafonds, des portes, des opercules, des couvercles, des sièges, des tables et des comptoirs pour des applications aériennes, ferroviaires, maritimes, automobiles et de construction.

13. Procédé de formation du mat fibreux consolidé selon la revendication 4 ou 5, comprenant
la coulée de la composition de fibres dans un solvant de suspension pour former une couche ;
la déshydratation de la couche ;
et la consolidation de la couche pour former le mat fibreux consolidé.
